# DEMANDE DE BREVET EUROPEEN

(11) **EP 2 267 910 A2**
(43) Date de publication de la demande: **29.12.2010**
(21) Numéro de dépôt: 10166232.8
(22) Date de dépôt: 16.06.2010
(51) Int. Cl.: H04B 1/40, H04B 1/00

(54) **Circuit de couplage multibandes**

(30) Priorité: 26.06.2009 FR 0954370
(71) Demandeur: STMicroelectronics (Tours) SAS, 37100 Tours (FR)
(72) Inventeur: Laporte, Claire, 37000, TOURS (FR); Ezzedine, Hilal, 37100, TOURS (FR)
(74) Mandataire: de Beaumont, Michel

(57) **Abrégé**

L'invention concerne un circuit (3) de couplage multibandes en lignes distribuées comportant : un nombre n de premières (INi) et de deuxièmes (OUTᵢ) bornes égal au nombre de bandes de fréquences ; une troisième borne (CPLD) et une quatrième borne (ISO) ; un nombre n de coupleurs (31ᵢ) en lignes distribuées égal au nombre de bandes de fréquences, tous les coupleurs étant identiques et dimensionnés en fonction de la bande de fréquences la plus élevée, et chaque coupleur comportant une première ligne conductrice (321) entre des premier et deuxième ports (INi, OUTᵢ) destinés à véhiculer un signal à transmettre de la bande de fréquences concernée, et une deuxième ligne conductrice couplée à la première entre des troisième et quatrième ports (CPLDᵢ, ISOᵢ) ; un premier ensemble de séparateurs résistifs (34i) en cascade entre les troisièmes ports (CPLDᵢ) des coupleurs, une borne du séparateur associé au premier coupleur étant reliée à la troisième borne (CPLD) du circuit de couplage ; et un deuxième ensemble de séparateurs résistifs (35i) en cascade entre les quatrièmes ports (ISOᵢ) des coupleurs, une borne du séparateur associé au premier coupleur étant reliée à la quatrième borne (ISO) du circuit de couplage.

## Description

### Domaine de l'invention

La présente invention concerne de façon générale l'industrie électronique et, plus particulièrement, les systèmes d'émission/réception radiofréquence. L'invention concerne plus précisément un coupleur bidirectionnel multibandes.

### Exposé de l'art antérieur

Un coupleur est généralement utilisé pour prélever une partie de la puissance présente sur une ligne de transmission, dite principale ou primaire, vers une autre ligne, dite couplée ou secondaire, située à proximité. Les coupleurs se répartissent en deux catégories selon qu'ils sont constitués de composants passifs discrets (on parle alors de coupleurs à éléments localisés) ou de lignes conductrices proches les unes des autres pour être couplées (on parle alors de coupleurs à lignes distribuées). L'invention concerne la deuxième catégorie de coupleurs. Les ports de la ligne principale sont généralement désignés IN (entrée) et OUT (sortie). Ceux de la ligne couplée sont généralement désignés CPLD (couplé) et ISO (isolé).

Dans de nombreuses applications, on a besoin de prélever une partie de la puissance transmise sur une ligne, par exemple, pour contrôler la puissance d'un amplificateur dans un système d'émission, pour contrôler la linéarité d'un amplificateur d'émission en fonction des pertes liées à la réflexion d'une antenne, pour adapter dynamiquement une antenne, etc.

Les principaux paramètres d'un coupleur sont :
les pertes d'insertion qui représentent la perte de transmission entre les deux ports IN et OUT de la ligne principale (les pertes d'insertion se définissent alors que les deux autres ports CPLD et ISO du coupleur sont chargés par une impédance de 50 ohms) ;
le couplage qui représente la perte de transmission entre les ports IN et CPLD (le couplage se définit alors que les deux ports OUT et ISO sont chargés par une impédance de 50 ohms) ;
l'isolation qui représente la perte de transmission entre les ports IN et ISO (l'isolation se définit alors que les deux autres ports OUT et CPLD sont chargés par une impédance de 50 ohms) ; et
la directivité qui représente la différence de perte en transmission entre les ports ISO et CPLD, depuis le port IN.

En théorie, un coupleur idéal présente une directivité infinie, c'est-à-dire qu'aucune puissance n'est présente sur le port de sa ligne secondaire situé en regard du port de sortie de sa ligne principale quand un signal circule du port d'entrée vers le port de sortie de cette ligne principale. En pratique, un coupleur est dit directionnel quand sa directivité est suffisante (typiquement supérieure à 20 dBm) pour que les puissances récupérées sur les accès de sa ligne secondaire permettent de distinguer le sens de circulation de la puissance dans la ligne principale. Quand les deux ports de la ligne secondaire du coupleur sont utilisés pour avoir simultanément l'information de puissance, le coupleur est dit bidirectionnel.

De plus en plus, les dispositifs d'émission/réception radiofréquence sont susceptibles de fonctionner dans plusieurs bandes de fréquences. C'est par exemple le cas de la téléphonie mobile où les téléphones mobiles sont passés de bi-bandes, à tribandes, puis à quadribandes.

La chaîne d'émission-réception comporte alors autant de voies que le dispositif est capable de traiter de bandes de fréquences à la fois en émission et en réception. Chaque voie est associée à un coupleur dimensionné en fonction de la bande de fréquences à traiter. En particulier, les longueurs des lignes principale et secondaire dépendent de cette bande de fréquences.

Ce besoin de dimensionnement différent des coupleurs complique la fabrication. De plus, avec des coupleurs de longueurs différentes, on assiste à des variations de directivité d'un coupleur à l'autre, ce qui n'est pas souhaitable.

Dans un coupleur, si les deux ports de sa ligne secondaire et le port de sortie de sa ligne principale sont parfaitement adaptés, aucune réflexion parasite ne se produit. Une telle adaptation parfaite ne peut malheureusement pas être obtenue en pratique. En particulier, le port sur lequel est prélevée la partie de la puissance par couplage est rarement idéalement adapté. Il en découle que les réflexions parasites engendrent des erreurs sur les informations récupérées.

Un défaut d'adaptation du port de la ligne secondaire du coupleur sur lequel est prélevée l'information peut avoir différentes origines. Le plus souvent, le coupleur est reporté sur un substrat isolant (par exemple de type circuit imprimé) pour être associé à d'autres circuits. Il n'est alors pas possible de garantir une parfaite adaptation (typiquement 50 ohms) du port de mesure. De plus, si les coupleurs ont des tailles différentes, cette adaptation risque de varier d'un coupleur à l'autre.

### Résumé

Ainsi, la présente invention vise à pallier tout ou partie des inconvénients des structures d'émission/réception radiofréquence multibandes utilisant un coupleur par voie.

Un objet d'un mode de réalisation de la présente invention est de réduire l'encombrement d'une structure de couplage multibandes.

Un autre objet d'un mode de réalisation de la présente invention est d'améliorer la fiabilité des mesures en les rendant peu ou insensibles à une variation d'adaptation des circuits connectés sur le port de mesure.

Pour atteindre tout ou partie de ces objets ainsi que d'autres, il est prévu un circuit de couplage multibandes en lignes distribuées comportant :
un nombre n de premières et de deuxièmes bornes égal au nombre de bandes de fréquences ;
une troisième borne et une quatrième borne ;
un nombre n de coupleurs en lignes distribuées égal au nombre de bandes de fréquences, tous les coupleurs étant identiques et dimensionnés en fonction de la bande de fréquences la plus élevée, et chaque coupleur comportant une première ligne conductrice entre des premier et deuxième ports destinés à véhiculer un signal à transmettre de la bande de fréquences concernée, et une deuxième ligne conductrice couplée à la première entre des troisième et quatrième ports ;
un premier ensemble de séparateurs résistifs en cascade entre les troisièmes ports des coupleurs, une borne du séparateur associé au premier coupleur étant reliée à la troisième borne du circuit de couplage ; et
un deuxième ensemble de séparateurs résistifs en cascade entre les quatrièmes ports des coupleurs, une borne du séparateur associé au premier coupleur étant reliée à la quatrième borne du circuit de couplage.

Selon un mode de réalisation de la présente invention, une borne de chaque séparateur résistif associée au dernier coupleur est connectée à la masse par un élément résistif ayant une valeur triple par rapport aux éléments résistifs respectifs des séparateurs.

Selon un mode de réalisation de la présente invention, les séparateurs résistifs associés au coupleur de rang n-1 sont reliés aux troisième et quatrième ports du coupleur de rang n.

Selon un mode de réalisation de la présente invention, chaque séparateur résistif comporte trois résistances de même valeur.

Selon un mode de réalisation de la présente invention, la valeur des résistances des séparateurs résistifs est choisie pour correspondre au tiers de l'impédance adaptée du circuit.

Selon un mode de réalisation de la présente invention, la deuxième ligne de chaque coupleur est interrompue approximativement en son milieu, les deux extrémités intermédiaires étant connectées à des atténuateurs.

On prévoit également un circuit d'émission ou de réception multibandes de signaux radiofréquence, comportant :
autant d'amplificateurs que de bandes de fréquences ;
un circuit de couplage ; et
un circuit, commun aux différents amplificateurs, de mesure d'une information prélevée sur le troisième port du circuit.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une représentation schématique sous forme de blocs d'une chaîne d'émission radiofréquence du type usuel ;
la figure 2 est un schéma-bloc d'un mode de réalisation d'une chaîne d'émission radiofréquence multibandes ;
la figure 3 illustre une première solution de circuit de couplage multibandes ;
la figure 4 représente un mode de réalisation d'un circuit de couplage multibandes ;
la figure 5 illustre le facteur de couplage du circuit de la figure 4 en fonction de la fréquence ;
la figure 6 détaille la réalisation de chaque coupleur du circuit de la figure 4 ;
la figure 7 illustre l'évolution de la directivité du circuit de la figure 4 en fonction de la fréquence ; et
la figure 8 représente partiellement une variante du circuit de la figure 4.

### Description détaillée

De mêmes éléments ont été désignés par de mêmes références aux différentes figures. Pour des raisons de clarté, seuls les éléments utiles à la compréhension de l'invention ont été représentés et seront décrits. En particulier, les circuits amont et aval de la structure de couplage multibandes n'ont pas été détaillés, l'invention étant compatible avec les circuits usuels.

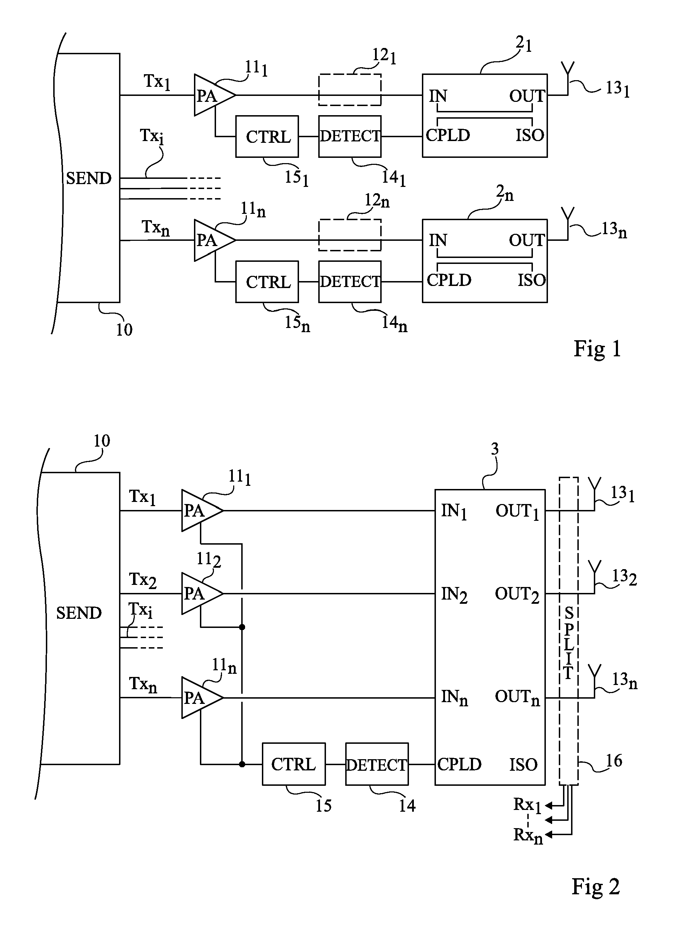

La figure 1 est un schéma bloc d'un exemple usuel de chaîne d'émission susceptible d'émettre dans plusieurs bandes de fréquence. Ce type de circuit équipe par exemple des dispositifs de communication de type téléphonie mobile.

Un circuit électronique 10 d'émission (SEND) est susceptible de générer des signaux Txi (i étant compris entre 1 et n) à émettre en fonction de la bande de fréquence utilisée. Ces signaux sont envoyés sur des amplificateurs de puissance 11ᵢ (PA) dont les sorties respectives traversent divers circuits de traitement et d'adaptation 12i illustrés en pointillés. Ces circuits 12i comprennent, entre autres et de façon non limitative, des dispositifs d'adaptation d'impédance à destination d'antennes d'émission 13ᵢ. Pour être capable d'ajuster la puissance de l'amplificateur 11ᵢ ou de tout autre élément (réseau d'adaptation d'impédance ajustable, etc.), un coupleur 2i est intercalé, par exemple, entre la sortie du circuit 12i et l'antenne correspondante. Le cas échéant, des séparateurs de voies (non représentés) sont intercalés entre le coupleur et l'antenne. De tels séparateurs servent à séparer l'émission de la réception qui est traitée par une ligne de réception radiofréquence non représentée.

Chaque coupleur 2i comporte une ligne principale intercalée entre l'amplificateur 11ᵢ et l'antenne 13i (ou entre la sortie du circuit 12i et l'antenne 13ᵢ). Un port ou accès IN, dit d'entrée, est côté amplificateur 11 tandis qu'un port ou accès OUT (parfois également appelé DIR), dit de sortie, est côté antenne 13ᵢ. Une ligne couplée ou secondaire du coupleur prélève une partie de la puissance de la ligne principale. Un port CPLD du coupleur, correspondant à l'extrémité de la ligne secondaire côté port IN, fournit une information sur la mesure. Cette information dépend, entre autres, des pertes dues à la réflexion de l'antenne. S'agissant d'un coupleur directif, l'extrémité ISO de la ligne secondaire, côté port OUT, n'est pas utilisée. Elle est chargée par une impédance de référence du circuit (typiquement 50 ohms). Dans l'exemple de la figure 1, la mesure, qui fournit une indication des pertes en réflexion engendrées par l'antenne, sert à adapter le gain de l'amplificateur au moyen d'un circuit 14i (DETECT) de détection du niveau sur le port CPLD du coupleur correspondant et d'un circuit 15ᵢ (CTRL) recevant l'information mesurée par le détecteur et commandant le gain de l'amplificateur 11ᵢ correspondant.

La mesure des pertes en réflexion de l'antenne peut également permettre une adaptation dynamique de l'antenne si celle-ci possède cette fonctionnalité.

Comme indiqué précédemment, la multiplication des circuits de commande et de détection nuit à la miniaturisation des lignes d'émission radiofréquence. De plus, dans la plupart des applications et notamment dans la téléphonie mobile, une seule ligne est utilisée à un instant donné, de sorte qu'il serait souhaitable de pouvoir partager au moins les circuits de commande et de détection.

La figure 2 est un schéma bloc à rapprocher de celui de la figure 1 illustrant une chaîne d'émission radiofréquence à circuit de couplage multibandes.

Comme précédemment, un circuit 10 de n voies est susceptible de générer des signaux Txi (i compris entre 1 et n) sur différentes bandes de fréquence qui sont envoyés sur des amplificateurs d'émission 11ᵢ à gain ajustable. Les sorties respectives des amplificateurs 11ᵢ sont envoyées sur n entrées INᵢ d'un circuit 3 de couplage multibande. Ce circuit comporte autant de sorties OUTᵢ destinées à être reliées aux antennes 13i affectées aux différentes bandes. Dans l'exemple de la figure 2, un séparateur (SPLIT) 16 a été symbolisé en pointillés pour séparer les flux d'émission des flux de réception au niveau des antennes 13i et fournir des signaux Rxi à une ligne de réception non représentée. Le circuit 3 ne comporte qu'un port CPLD et un port ISO. Le port CPLD est relié à un détecteur 14 dont la sortie est connectée à un circuit de commande 15. La sortie du circuit de commande 15 est reliée aux entrées de commande de gain respectif des amplificateurs 11ᵢ. Le cas échéant, des circuits de commutation et d'aiguillage des signaux sont intercalés entre le circuit de commande 15 et les entrées de commande de gain des amplificateurs 11ᵢ.

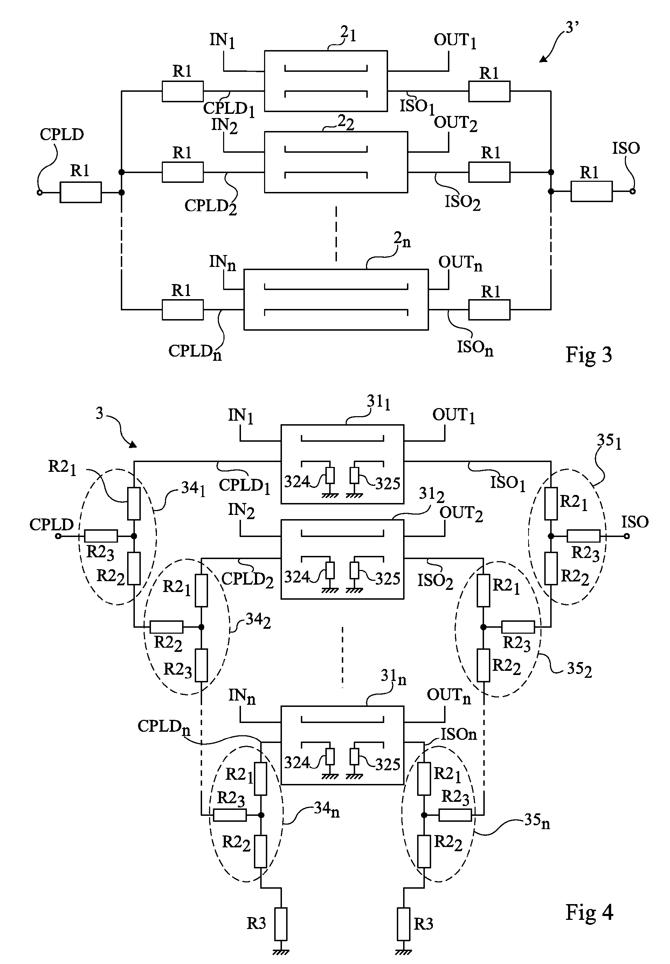

La figure 3 représente un exemple usuel de circuit 3' de couplage multibandes susceptible d'être utilisé dans la chaîne de la figure 2. Le circuit 3' comporte n coupleurs 2i dont les entrées et sorties respectives des lignes principales définissent les différentes bornes INi et OUTᵢ du circuit 3'. Les bornes CPLDᵢ et ISOᵢ des différents coupleurs 2i sont connectées par l'intermédiaire d'un réseau d'adaptation d'impédance aux bornes CPLD et ISO du circuit 3'. Typiquement, chaque borne CPLDᵢ est reliée à la borne CPLD par une association en série de deux résistances R1, une de ces résistances étant partagée par toutes les connexions. La même structure est reproduite côté borne ISO. Toutes les résistances R1 ont la même valeur. Cette valeur est calculée en fonction de l'impédance R souhaitée pour le coupleur (typiquement 50 ohms) et correspond à R1 = R(n-1)/(n+1). Avec de telles valeurs, on obtient une atténuation entre deux ports qui dépend du nombre de bandes.

Dans la mesure où le couplage doit être constant pour toutes les bandes afin de permettre une détection et une mesure correcte indépendamment de la bande concernée, les coupleurs 2i présentent des longueurs de lignes différentes en fonction de la bande de fréquences. En pratique, ces longueurs correspondent à celles des coupleurs séparés (figure 1). Il en découle une complexité dans la fabrication. De plus, la directivité varie dans la mesure où la directivité du coupleur dépend de la longueur de ligne. Il n'est donc pas possible d'obtenir une directivité constante pour toutes les bandes.

La figure 4 représente un mode de réalisation d'un circuit de couplage multibandes 3 permettant d'obtenir une directivité approximativement identique pour toutes les bandes.

Comme dans le circuit de la figure 3, un coupleur 31i en lignes distribuées est affecté à chaque bande de fréquences. Toutefois, tous les coupleurs 31i présentent des longueurs de lignes égales et sont, de préférence, identiques (en forme, matériaux, etc.). Le fait que les longueurs des lignes soient identiques engendre que tous les coupleurs ont la même directivité intrinsèque, donc que le circuit de couplage présente une directivité indépendante de la bande de fréquences.

Chaque port CPLDᵢ et chaque port ISOᵢ est relié à la borne CPLD, respectivement ISO, du circuit 3 par un nombre d'étages résistifs 34ᵢ, respectivement 35ᵢ, correspondant à son rang i. Chaque étage résistif 34i ou 35i comporte trois résistances R2 dans une structure en T et forme un séparateur résistif. La borne CPLDᵢ, respectivement ISOᵢ, de chaque coupleur 31i est reliée à une extrémité d'une première résistance R2₁ de son étage 34ᵢ, respectivement 35ᵢ. Cette première résistance R2₁ est en série avec une deuxième résistance R2₂ du même étage pour, à l'exception de celles des étages 34ₙ et 35ₙ du dernier coupleur 31ₙ, être connectée à la troisième résistance R2₃ de l'étage 34ᵢ₊₁, respectivement 35ᵢ₊₁, du coupleur suivant (par son rang i). A l'exception des étages 34₁ et 35₁ du premier coupleur 31₁, le point milieu entre les première R2₁ et deuxième R2₂ résistances d'un étage 34ᵢ, respectivement 35ᵢ, est donc relié par la troisième résistance R2₃ de cet étage à la deuxième résistance R2 de l'étage 34ᵢ₋₁, respectivement 35ᵢ₋₁, du coupleur précédent. Les troisièmes résistances R2₃ des étages 34₁ et 35₁ du premier coupleur 31₁ sont respectivement reliées aux bornes CPLD et ISO du circuit 3. Les deuxièmes résistances des étages 34ₙ et 35ₙ du dernier coupleur 31ₙ sont respectivement reliées, par une résistance R3, à la masse. La valeur de cette résistance R3 correspond au triple des valeurs des résistances R2. Les séparateurs résistifs 34i ainsi réalisés sont en cascade entre les différents coupleurs. Fonctionnellement, chaque coupleur voit, sur son port CPLDᵢ, une résistance de valeur R3 et la borne CPLD du circuit 3 voit également une résistance de valeur R3. Il en est de même pour les bornes ISO et ISOᵢ.

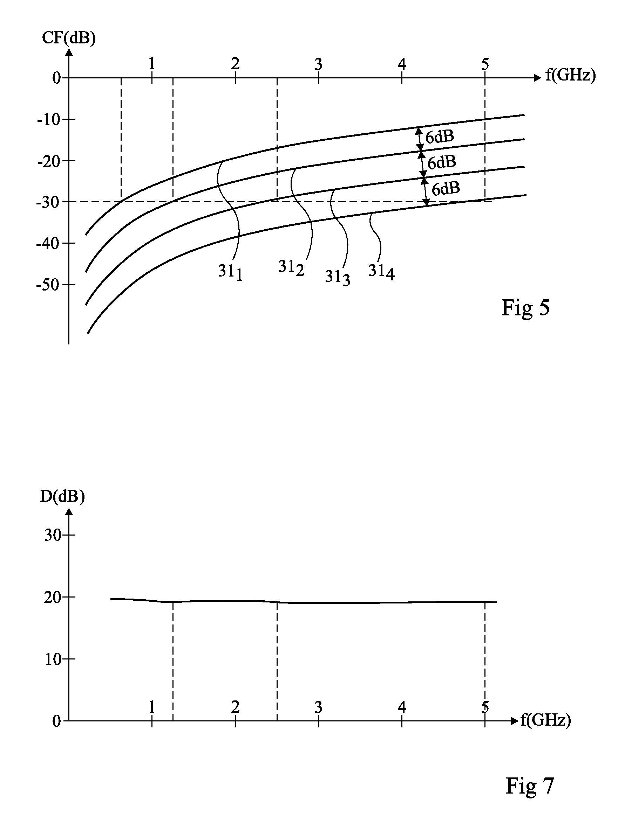

La figure 5 représente un exemple de facteurs de couplage CF obtenus en fonction de la fréquence avec un circuit de couplage 3 tel que représenté en figure 4. On suppose un circuit de quatre coupleurs 31i dont les réponses respectives sont désignées par les références des coupleurs (31₁ à 31₄). On voit que les courbes de facteur de couplage en fonction de la fréquence sont décalées de 6 dB d'un coupleur à l'autre. Il est donc possible de dimensionner un coupleur en fonction de la directivité et du facteur de couplage souhaités pour la bande de fréquence maximale (dans l'exemple le coupleur 31₄ pour obtenir un couplage de -30 dB à 5 GHz). Puis, les atténuations successives que procurent les étages 34i et 35i fournissent des facteurs de couplage de -30 dB pour des bandes de fréquence inférieures.

Chaque séparateur apporte une atténuation de 6 dB. Par conséquent, l'atténuation entre le port CPLD du circuit 3 et le port CPLDᵢ d'un coupleur 31i est proportionnelle au rang i de ce coupleur et vaut 6 dB multiplié par le rang de l'étage.

De préférence, les coupleurs 31i ont une structure améliorée en terme de directivité pour éviter de voir apparaître certains dysfonctionnements, par exemple, une erreur de détection qui, dans un coupleur du type de ceux de la figure 1, se produit si les pertes en réflexion correspondent à une atténuation supérieure à la directivité (signal réfléchi plus atténué que le coefficient de directivité).

En pratique, on considère qu'à partir de 20 dB de directivité, le coupleur est correct. Pour ce qui est du facteur de couplage, un couplage inférieur à -30 dB est souvent requis pour ne pas trop atténuer le signal transmis (un couplage de -30 dB correspond à prélever un millième de la puissance transmise).

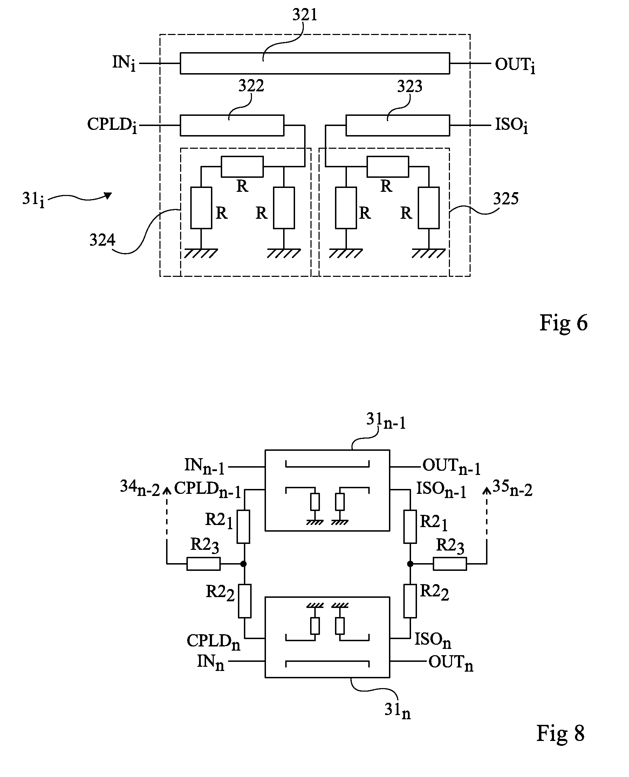

La figure 6 représente un mode de réalisation d'un coupleur 31i à directivité améliorée du type de ceux utilisés dans le circuit de la figure 4. Ce coupleur 31i en lignes distribuées comporte une ligne principale 321, destinée à être intercalée sur la ligne de transmission par ses deux ports ou bornes INi et OUTᵢ, respectivement d'entrée et de sortie. Une ligne secondaire, formée de deux tronçons 322 et 323 parallèles à la ligne 321, définit les ports ou bornes CPLDᵢ et ISOᵢ destinés à véhiculer l'information proportionnelle à la puissance transmise dans la ligne 321. Les tronçons 322 et 323 sont, de préférence, symétriques, c'est-à-dire de même longueur. Leurs extrémités respectives externes sont reliées aux ports CPLDᵢ et ISOᵢ. Leurs extrémités respectives internes sont connectées à des atténuateurs 324 et 325. Chaque atténuateur est, par exemple, formé de trois résistances R couplées en PI. Une première résistance R est intercalée en série à chaque extrémité 322 ou 323 de la ligne tandis que les deux autres résistances R connectent les deux extrémités de la première résistance à la masse. Les valeurs des résistances R sont toutes identiques pour les deux atténuateurs 324 et 325.

Les atténuateurs 324 et 325 sont de préférence choisis pour fournir une atténuation au moins égale à la moitié de la directivité du coupleur. En prenant l'exemple d'un coupleur ayant une directivité de -30 dB, cela signifie que les atténuateurs 324 et 325 sont chacun d'au moins 15 dB. La structure de coupleur représentée en figure 5 permet de s'affranchir de l'influence des charges présentes sur les ports CPLDᵢ et ISOᵢ. En pratique, un tel coupleur est réalisé sous la forme de pistes conductrices portées par un substrat isolant. Le plus souvent, les lignes sont rectilignes et leur longueur est choisie en fonction de la fréquence de fonctionnement du coupleur 2 (par exemple la longueur de la ligne 321 est en λ/2). Un coupleur tel que décrit en relation avec la figure 6 correspond au coupleur bidirectionnel décrit dans la demande de brevet français N° 07/59185 - 07/TO/295-296, B8533.

La figure 7 représente l'allure de la directivité du circuit de couplage 3 en fonction de la fréquence. Cette allure est approximativement plane autour de 25 dB.

L'exemple des figures 5 et 7 a été obtenu pour des coupleurs ayant des lignes d'environ 1 mm de long et avec une valeur d'adaptation R3 de 50 ohms, donc des valeurs de résistances R2 de 16,67 ohms. Les fréquences respectives des étages, pour un facteur de couplage de -30 dB, correspondent à 5 GHz pour le coupleur 31₄, 2,4 GHz pour le coupleur 31₃, 1,2 GHz pour le coupleur 31₂ et 800 MHz pour le coupleur 31₁.

La figure 8 représente une variante de la structure de la figure 4 dans laquelle la résistance R3 est remplacée par le dernier coupleur 31ₙ en connectant ses bornes CPLDₙ et ISOₙ aux deuxièmes résistances respectives R2₂ des atténuateurs de l'étage n-1. Une telle réalisation permet d'obtenir un dernier étage avec des performances similaires à l'étage précédent et peut servir, par exemple, pour des applications dans lesquelles les deux dernières bandes de fréquences sont proches l'une de l'autre.

En pratique, le nombre de bandes de fréquence des chaînes d'émission des applications que vise plus particulièrement la présente invention est de l'ordre de 3 à 4 bandes.

La structure décrite est compatible avec une intégration des coupleurs et des résistances. Elle permet un gain de place en rendant possible de dimensionner les lignes du coupleur pour la fréquence la plus élevée.

Divers modes de réalisation avec diverses variantes ont été décrits ci-dessus. On notera que l'homme de l'art pourra combiner divers éléments de ces divers modes de réalisation et variantes sans faire preuve d'activité inventive.

De plus, la réalisation pratique du circuit de couplage multibandes décrit ci-dessus est à la portée de l'homme du métier à partir des indications fonctionnelles données. Par exemple, le choix des valeurs des résistances du coupleur pourra être modifié en fonction de l'adaptation d'impédance souhaité.

En outre, bien que l'invention ait été plus particulièrement décrite en relation avec un exemple de chaîne d'émission, le circuit de couplage multibandes décrit est également utilisable dans une chaîne de réception.

## Revendications

1. Circuit (3) de couplage multibandes en lignes distribuées comportant :
un nombre n de premières (INi) et de deuxièmes (OUTᵢ) bornes égal au nombre de bandes de fréquences ;
une troisième borne (CPLD) et une quatrième borne (ISO) ;
un nombre n de coupleurs (31i) en lignes distribuées égal au nombre de bandes de fréquences, tous les coupleurs étant identiques et dimensionnés en fonction de la bande de fréquences la plus élevée, et chaque coupleur comportant une première ligne conductrice (321) entre des premier et deuxième ports (INi, OUTᵢ) destinés à véhiculer un signal à transmettre de la bande de fréquences concernée, et une deuxième ligne conductrice (322, 323) couplée à la première entre des troisième et quatrième ports (CPLDᵢ, ISOᵢ) ;
un premier ensemble de séparateurs résistifs (34i) en cascade entre les troisièmes ports (CPLDᵢ) des coupleurs, une borne du séparateur associé au premier coupleur étant reliée à la troisième borne (CPLD) du circuit de couplage ; et
un deuxième ensemble de séparateurs résistifs (35i) en cascade entre les quatrièmes ports (ISOᵢ) des coupleurs, une borne du séparateur associé au premier coupleur étant reliée à la quatrième borne (ISO) du circuit de couplage.

2. Circuit selon la revendication 1, dans lequel une borne de chaque séparateur résistif (34ₙ, 35ₙ) associée au dernier coupleur est connectée à la masse par un élément résistif (R3) ayant une valeur triple par rapport aux éléments résistifs respectifs (R2) des séparateurs.

3. Circuit selon la revendication 1, dans lequel les les séparateurs résistifs associés au coupleur de rang n-1 sont reliés aux troisième et quatrième ports du coupleur de rang n.

4. Circuit selon l'une quelconque des revendications 1 à 3, dans lequel chaque séparateur résistif (34ᵢ, 35i) comporte trois résistances (R2₁, R2₂, R2₃) de même valeur.

5. Circuit selon la revendication 4, dans lequel la valeur des résistances des séparateurs résistifs (34ᵢ, 35i) est choisie pour correspondre au tiers de l'impédance adaptée du circuit.

6. Circuit selon l'une quelconque des revendications 1 à 5, dans lequel la deuxième ligne de chaque coupleur est interrompue approximativement en son milieu, les deux extrémités intermédiaires étant connectées à des atténuateurs (324, 325).

7. Circuit d'émission ou de réception multibandes de signaux radiofréquence, comportant :
autant d'amplificateurs que de bandes de fréquences ;
un circuit de couplage (3) conforme à l'une quelconque des revendications 1 à 6 ; et
un circuit (14), commun aux différents amplificateurs, de mesure d'une information prélevée sur le troisième port (CPLD) du circuit.
